(19)

Europäisches Patentamt
European Patent Office
Office européen des brevets

(11) **EP 3 437 861 A1**

(12) **EUROPEAN PATENT APPLICATION**
published in accordance with Art. 153(4) EPC

(43) Date of publication:
**06.02.2019 Bulletin 2019/06**

(51) Int Cl.:
**B32B 27/36** (2006.01)  **C08J 5/18** (2006.01)
**F16L 59/065** (2006.01)

(21) Application number: **17774869.6**

(22) Date of filing: **27.03.2017**

(86) International application number:
**PCT/JP2017/012261**

(87) International publication number:
**WO 2017/170332 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016  JP 2016068817**

(71) Applicant: **Toyobo Co., Ltd.**
**Osaka-shi**
**Osaka 530-8230 (JP)**

(72) Inventor: **GOTO, Takamichi**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(54) **LAMINATE FOR VACUUM INSULATION MATERIAL**

(57)     It is provided that an exterior material for vacuum insulation material which can suppress the generation of pinholes due to piercing of needle-like short fiber powder even when needle-like fiber powder such as cut of inorganic fiber such as glass wool is filled, and which has little deterioration in strength even when used for a long time. A exterior body for vacuum insulation material comprises at least a base layer and a sealant layer, wherein the base layer has the following features (a) to (c), and the base layer is a biaxially stretched polybutylene terephthalate film having a thickness of 10 to 30 μm.
(a) containing 60-90% by weight of polybutylene terephthalate resin (A) and 10-40% by weight of polyester resin (B) other than the polybutylene terephthalate resin (A).
(b) an intrinsic viscosity of not less than 0.81dl/g.
(c) piercing strength of not less than 0.5N/μm.

EP 3 437 861 A1

**Description**

TECHNICAL FIELD

The present invention relates to an exterior body for a vacuum heat insulation material comprising a biaxially stretched polybutylene terephthalate film and a sealant layer. More particularly, the present invention relates to a biaxially stretched polybutylene terephthalate film having excellent piercing strength and heat resistance and useful as an exterior material of a vacuum insulation material.

BACKGROUND ART

In recent years, reduction of greenhouse gases has been promoted to prevent global warming, and energy saving of electric products, vehicles, facility equipment, buildings and the like is required. Among them, from the viewpoint of reducing the power consumption, adoption of vacuum heat insulation materials for electric products and the like is proceeding. In equipment having a heat generating part inside the main body and equipment having a heat keeping function utilizing heat from the outside such as electric appliances, it is possible to improve the heat insulating performance of the whole apparatus by providing a vacuum insulation material. For this reason, efforts are being made to reduce the energy of appliances such as electric products by using vacuum insulation materials.

The vacuum insulation material is formed by sealing a core material in an outer packaging material, evacuating the interior of the outer packaging material to a vacuum state, sealing the end portion of the outer packaging material by thermal welding. By setting the inside of the heat insulating material in a vacuum state, convection of the gas is blocked, so that the vacuum insulation material can exhibit high heat insulating performance.

Further, in order to maintain the heat insulating performance of the vacuum insulation material for a long time, it is necessary to maintain the inside of the outer packaging material in a high vacuum state for a long time. Therefore, various functions such as gas barrier property for preventing permeation of gas from the outside, thermal adhesiveness for hermetically sealing the core material, and the like are required for the outer packaging material.

Therefore, the outer packaging material is configured as a laminate having a plurality of films with the respective functional properties. As a general form of the outer packaging material, a thermal welding layer, a gas barrier layer, and a protective layer are laminated, and the respective layers are laminated via an adhesive or the like.

As the base material layer of the above-mentioned exterior material for a vacuum insulation material, for example, in Patent Document 1, there has been known a technique that even when needle-like fiber powder such as cut of inorganic fiber such as glass wool is filled, the occurrence of pinholes due to piercing of needle-like short fiber powder can be suppressed by using a stretched nylon film alone or a laminate of a nylon film and a polyester film.

However, in this conventional technique, the nylon film is deteriorated due to a long-term heat resistance test, so that the strength of the film is lowered.

Patent Document 2 discloses a polyethylene terephthalate film having piercing load of the film at 5°C of 5 N to 15 N and the piercing displacement of 2.5 to 7 mm, and thickness of 10 to 40 $\mu$m obtained by biaxially stretching polyethylene terephthalate of high intrinsic viscosity or polyethylene terephthalate with small amount of amorphous copolymerized polyethylene terephthalate under specific conditions has excellent formability for drawing for exterior use of lithium ion battery.

Although PET resin is used in this technique and the film is excellent in durability, piercing strength can't be sufficiently increased with PET resin alone, and there is room for study to further improve piercing strength.

As a means for achieving both piercing resistance and durability of the film at the same time, a polybutylene terephthalate (PBT) resin having a molecular skeleton that is more flexible than polyethylene terephthalate (PET) resin can use. For example, in Patent Document 3, the technique has been known that an unstretched PBT film having a specific range of piercing displacement has excellent processing suitability for the purpose of drawing as an exterior of a lithium ion battery. However, since such conventional technology use unstretched film, the orientation of PBT is weak, and the properties of the original polybutylene terephthalate (PBT) performance can't be sufficiently drawn out from the viewpoint of mechanical properties and piercing strength, so that there is a problem that the piercing strength is insufficient for use as an exterior material of the vacuum insulation.

As a means for obtaining a PBT film excellent in piercing resistance, a means for stretching polybutylene terephthalate (PBT) to increase the degree of orientation can be considered.

For example, in Patent Document 4, a technique has been known in which a uniformly stretched film with no thickness unevenness is produced by stretching in the transverse direction (TD) with a stretching ratio of 3.5 times or less, and then stretching in the MD direction at a deformation rate of 100000%/min or more to manufacture a biaxially stretched polybutylene terephthalate (PBT) film. However, as can be understood from the result of the example, in such a conventional technique, since only the deformation speed in the MD direction is increased, the elongation is low. Consequently, there is a problem that the balance between the longitudinal direction (MD) and the traverse direction (TD) of the film is not good.

Further, in Patent Document 5, a technique has been known in which a polybutylene terephthalate (PBT) film manufactured to have a breaking strength in four directions of not less than a specific value by using a tubular simultaneous biaxial orientation method, and the film is excellent in mechanical properties and dimensional stability. However, such a conventional technique has a problem in that the thickness precision is poor due to the manufacturing method thereof and the plane orientation coefficient is not high, so that the piercing strength is low.

In Patent Document 6, a technique has been known in which two resins, polybutylene terephthalate (PBT) and resin such as polyethylene terephthalate (PET) or polyethylene naphthalate (PEN), are laminated alternately, so the laminate has high rigidity and the laminate is superior in dimensional stability under high temperature and moldability. However, in such the conventional technique, because layers of PET or PEN resin are laminated in addition to polybutylene terephthalate (PBT), it is stretched at the stretching temperature of PET or PEN having a glass transition temperature (Tg) higher than that of polybutylene terephthalate (PBT). Consequently, polybutylene terephthalate (PBT) is stretched at high temperature, and it is not supposed to derive the characteristics of the original PBT film. Furthermore, in such the conventional technique, there are two kinds of resin compositions in the film, so it is difficult to reuse trimming waste at the time of film formation and the like by adding it to raw material again, and it was disadvantageous in view of economy.

PRIOR ART DOCUMENT

PATENT DOCUMENTS

> Patent Document 1: JP-A-2006-77799
> Patent Document 2: JP-A-2011-204674
> Patent Document 3: JP-A-2012-77292
> Patent Document 4: JP-A- Sho-51-146572
> Patent Document 5: JP-A-2012-146636
> Patent Document 6: WO 2004/108408 A

SUMMARY OF THE INVENTION

PROBLEMS TO BE SOLVED BY THE INVENTION

The present invention has been made in view of the problems on the conventional technology. That is, an object of the present invention is to provide a biaxially stretched polybutylene terephthalate film which can suppress the generation of pinholes due to piercing of needle-like short fiber powder even when needle-like fiber powder such as cut of inorganic fiber such as glass wool is filled, and which has little deterioration in strength even when used for a long time, and an exterior material for vacuum insulation material using the same.

SOLUTIONS TO THE PROBLEMS

As a result of intensive study to achieve the above object, the present inventors have completed the present invention.

That is, the present invention is an exterior body for vacuum insulation material comprising at least a base layer and a sealant layer, wherein the base layer has the following features (a) to (c), and the base layer is a biaxially stretched polybutylene terephthalate film having a thickness of 10 to 30 $\mu$m.

> (a) containing 60-90% by weight of polybutylene terephthalate resin (A) and 10-40% by weight of polyester resin (B) other than the polybutylene terephthalate resin (A).
> (b) an intrinsic viscosity of not less than 0.81dl/g.
> (c) piercing strength of not less than 0.5N/$\mu$m.

In this case, it is preferable that the polyester resin (B) other than the polybutylene terephthalate resin (A) is at least one resin selected from the group consisting of polyethylene terephthalate (PET); polyethylene naphthalate (PEN); polybutylene naphthalate (PBN); polypropylene terephthalate (PPT); polybutylene terephthalate (PBT) resin copolymerized with at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid; polybutylene terephthalate (PBT) resin copolymerized with at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol; polyethylene terephthalate (PET) resin copolymerized with at least one dicarboxylic acid selected from the group consisting of isophthalic acid, orthophthalic acid, naphthalene dicarboxylic acid, biphenyl dicarboxylic acid, cyclohexane dicarboxylic acid, adipic acid, azelaic acid, and sebacic acid; and polyethylene terephthalate (PET) resin copolymerized with at least one diol component selected from the group consisting of 1,3-butanediol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

In this case, it is preferable that a laminate for vacuum insulation material wherein an inorganic thin film layer is provided on the biaxially stretched polybutylene terephthalate film.

EFFECT OF THE INVENTION

The inventors of the present invention have found that a biaxially stretched polybutylene terephthalate film which can suppress the generation of pinholes due to piercing of needle-like short fiber powder even when the needle-like fiber powder such as cut of inorganic fiber such as glass wool is filled, and which has little deterioration in strength even when used for a long time, and an exterior material for vacuum insulation material using the same film can be obtained.

MODE FOR CARRYING OUT THE INVENTION

Hereinafter, the present invention will be described in detail.

A polyester thermoplastic resin composition used for the base layer of the present invention contains a polybutylene terephthalate (PBT) resin (A) as a main constituent component, and the content of the polybutylene terephthalate (PBT) resin (A) is preferably not less than 60% by mass, preferably not less than 75% by mass, and further preferably not less than 85% by mass. When the content is less than 60% by mass, the impact strength and the piercing resistance are lowered and film characteristics become insufficient.

In the polybutylene terephthalate (PBT) resin (A) used as a main constituent component, terephthalic acid as a dicarboxylic acid component is used in an amount of preferably not less than 90 mol%, more preferably not less than 95 mol%, further preferably not less than 98 mol%, and most preferably 100 mol%. As a glycol component, 1,4-butanediol is used in an amount of preferably not less than 90 mol%, more preferably not less than 95 mol%, and further preferably not less than 97 mol%, and most preferably, no other than byproducts produced by ether linkage of 1,4-butanediol at the time of polymerization is contained.

The polyester thermoplastic resin composition used for the base layer of the present invention can contain a polyester resin (B) other than polybutylene terephthalate (PBT) resins for the purpose of adjusting the film formability at the time of performing biaxial stretching and the mechanical characteristics of the film to be obtained.

Examples of the polyester resin (B) other than polybutylene terephthalate (PBT) resins include polyester resins such as polyethylene terephthalate (PET), polyethylene naphthalate (PEN), polybutylene naphthalate (PBN), and polypropylene terephthalate (PPT), as well as PBT resins copolymerized with dicarboxylic acids such as isophthalic acid, orthophthalic acid, naphthalenedicarboxylic acid, biphenyldicarboxylic acid, cyclohexanedicarboxylic acid, adipic acid, azelaic acid, and sebacic acid, PBT resins copolymerized with diol component such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol, polyethylene terephthalate (PET) resins copolymerized with at least one dicarboxylic acid selected from the group consisting of isophthalic acid, orthophthalic acid, naphthalene dicarboxylic acid, biphenyl dicarboxylic acid, cyclohexane dicarboxylic acid, adipic acid, azelaic acid, and sebacic acid, polyethylene terephthalate (PET) resins copolymerized with at least one diol component selected from the group consisting of 1,3-butanediol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

The lower limit of the intrinsic viscosity of the polybutylene terephthalate (PBT) resin (A) used for the base layer of the present invention is preferably 0.8 dl/g, more preferably 0.95 dl/g, and further preferably 1.0 dl/g.

If the intrinsic viscosity of the polybutylene terephthalate (PBT) resin (A) as the raw material is less than 0.9 dl/g, the intrinsic viscosity of the film obtained by film formation is lowered, and impact strength, piercing resistance and the like may be lowered.

The upper limit of the intrinsic viscosity of the polybutylene terephthalate (PBT) resin (A) is preferably 1.3 dl/g. If the intrinsic viscosity is more than the above value, the stress at the time of stretching may become too high and the film forming property may deteriorate.

The upper limit of the amount of the polyester resin (B) added other than polybutylene terephthalate (PBT) resin (A) is preferably not more than 40% by mass, particularly preferably not more than 35% by mass, further preferably not more than 15% by mass. If the amount of the polyester resin added other than polybutylene terephthalate (PBT) resins is more than 40% by mass, the mechanical characteristics as polybutylene terephthalate (PBT) resins may be impaired, the impact strength and piercing resistance may become insufficient, and further the transparency and the barrier property may be lowered, and the like.

The lower limit of the melting temperature of the polyester-based thermoplastic resin composition is preferably 200°C, and if the melting temperature is less than 200°C, the discharge may become unstable. The upper limit of the melting temperature of the resin is preferably 300°C, and if the melting temperature is more than 300°C, the deterioration of PBT resin may occur.

The above-mentioned polyester-based thermoplastic resin composition may contain conventionally known additives, for example, a lubricant, a stabilizer, a coloring agent, an antioxidant, an anti-static agent, an ultraviolet absorber, and the like, as necessary.

As a lubricant, inorganic lubricants such as silica, calcium carbonate and alumina, as well as organic lubricants are preferable, silica and calcium carbonate are more preferable, and among them, silica is particularly preferable from the viewpoint of reducing haze. These lubricants provide transparency and slippage in the film.

The lower limit of the concentration of the lubricant in the polyester-based thermoplastic resin composition is preferably 100 ppm, and if the concentration is less than 100 ppm, the slippage may be lowered. The upper limit of the concentration of the lubricant is preferably 20000 ppm, and if the concentration is more than 20000 ppm, the transparency may be lowered.

The lower limit of the intrinsic viscosity of the biaxially stretched polybutylene terephthalate film used for the base layer of the present invention is preferably 0.80 dl/g, more preferably 0.85 dl/g, further preferably 0.90 dl/g, and particularly preferably 0.95 dl/g. When the intrinsic viscosity is not less than the above value, impact strength, piercing resistance and the like are improved. In addition, the barrier property after bending is also good.

The upper limit of the intrinsic viscosity of the biaxially stretched polybutylene terephthalate film is preferably 1.2 dl/g, and further preferably 1.1 dl/g. When the intrinsic viscosity is more than the above value, the stress at the time of stretching does not become too high, and the film formability becomes favorable.

The lower limit of the intrinsic viscosity of the biaxially stretched polybutylene terephthalate film used for the base layer of the present invention is preferably 0.8, more preferably 0.85, further preferably 0.9, particularly preferably, and most preferably. If the intrinsic viscosity is less than the above value, impact strength, piercing resistance and the like may be lowered. The upper limit of the intrinsic viscosity of the film is preferably 1.2. If the intrinsic viscosity is more than the above value, the stress at the time of stretching may become too high and the film formability may deteriorate.

The biaxially stretched polybutylene terephthalate film used for the base layer of the present invention is preferably formed of a resin having the same composition throughout the entire film.

A layer of another material may be on the film used for the base layer of the present invention, and as a method for lamination, the layer of another material can be stuck after formation of the biaxially stretched polybutylene terephthalate film used for the base layer of the present invention or the layer can be stuck during the polyester film formation.

The lower limit of the piercing strength (N/$\mu$m) of the biaxially stretched polybutylene terephthalate film used for the base layer of the present invention is preferably 0.5, more preferably 0.7, and further preferably 0.8. If the piercing strength is less than the above value, the strength may be insufficient when used as an exterior material bag for vacuum insulation material.

The upper limit of the piercing strength (J/$\mu$m) of the biaxially stretched polybutylene terephthalate film used for the base layer of the present invention is preferably 1.5. If the piercing strength is more than the above value, the effect of improvement may be saturated.

The piercing strength of the biaxially stretched polybutylene terephthalate film used for the base layer can be controlled by MD ratio, thermo-setting temperature, and multi-layering.

The lower limit of the impact strength J/$\mu$m of the biaxially stretched polybutylene terephthalate film used for the base layer of the present invention is preferably 0.055, more preferably 0.060, and further preferably 0.065. If the impact strength is less than the above value, the strength may be insufficient when used as a bag.

The upper limit of the impact strength J/$\mu$m of the biaxially stretched polybutylene terephthalate film used for the base layer of the present invention is preferably 0.2. If the impact strength is more than the above value, the effect of improvement may be saturated.

The upper limit of the haze (%/$\mu$m) per thickness of the biaxially stretched polybutylene terephthalate film used for the base layer of the present invention is preferably 0.35%, more preferably 0.33%, and further preferably 0.31%.

If the haze is more than the above value, there is a possibility that the quality of printed characters and images may be impaired when the biaxially stretched polybutylene terephthalate film is subjected to printing.

The lower limit of the thermal shrinkage (%) of the biaxially stretched polybutylene terephthalate film of the present film in each of the longitudinal direction and the width direction is preferably 0. If the thermal shrinkage is less than the above value, the effect of improvement may be saturated, and the film may become brittle in mechanical properties.

The upper limit of the thermal shrinkage (%) of the film used for the base layer of the present invention in each of the longitudinal direction and the width direction is preferably 4.0, more preferably 3.5, and further preferably 3.0. If the thermal shrinkage is more than the above value, pitch deviation and the like may occur according to dimensional changes during processing such as printing. In addition, the barrier property after bending tends to be lowered.

The lower limit of thickness of the biaxially stretched polybutylene terephthalate film used for the base layer of the present invention is preferably 3 $\mu$m, more preferably 5 $\mu$m, and further preferably 8 $\mu$m. If the film thickness is less than 3 $\mu$m, strength as a film may be insufficient.

The upper limit of thickness of the biaxially stretched polybutylene terephthalate film used for the base layer of the present invention is preferably 100 $\mu$m, more preferably 75 $\mu$m, and further preferably 50 $\mu$m. If the film thickness is more than 100 $\mu$m, the film may become too thick so that processing relevant to the aim of the present invention may be difficult.

(Method for producing the biaxially stretched polybutylene terephthalate film used for the base layer)

A preferred method for obtaining the film used for the base layer of the present invention includes multi-layering raw materials having the same composition, followed by casting.

Since a PBT resin has a high crystallization rate, crystallization proceeds even at the time of casting. At this time, in the case of casting in monolayering without multi-layering, there is no barrier that can suppress crystal growth, and thus the crystals are grown to be spherulites having large size. As a result, the obtained unstretched sheet has high yield stress and is easy to be broken at the time of biaxial stretch, so that the obtained biaxially stretched film has impaired flexibility and impact strength and piercing resistance.

Meanwhile, the present inventors have found that the stretching stress of an unstretched sheet can be lowered and stable biaxial stretch is made possible by laminating the same resin in multi-layering manner.

Specifically, the method for producing a biaxially stretched polybutylene terephthalate film used for the base layer of the present invention includes at least the following steps of: Step (1) melting a thermoplastic resin composition containing not less than 60% by weight of a polybutylene terephthalate resin to form a molten fluid; Step (2) forming a laminated fluid having the number of lamination of not less than 60 from the molten fluid formed in Step (1); Step (3) discharging the laminated fluid formed in Step (2) from a die and casting on a cooling roll to be solidified so that a laminate is formed; and Step (4) biaxially stretching the laminate.

There may be no problem even if other steps are inserted between Step (1) and Step (2) as well as between Step (2) and Step (3). For example, a filtration step, a temperature change step and the like may be inserted between Step (1) and Step (2). Besides, a temperature change step, a charge addition step and the like may be inserted between Step (2) and Step (3). However, there should not be a step of breaking the laminated structure formed in Step (2) between Step (2) and Step (3).

In Step (1), the method of melting a thermoplastic resin to form a molten fluid is not particularly limited, and a preferred method includes a method of melting a thermoplastic resin under heat using a single screw extruder or twin screw extruder.

The method of forming a laminated fluid in Step (2) is not particularly limited, but from the viewpoint of facility simplicity and maintainability, a static mixer and/or a multi-layer feed block is more preferable. Also, from the viewpoint of uniformity in the sheet width direction, one having a rectangular melt line is more preferable. It is further preferred to use a static mixer or a multi-layer feed block having a rectangular melt line. A resin composition composed of a plurality of layers formed by combining a plurality of resin compositions may be passed through one or more of a static mixer, a multi-layer feed block and a multi-layer manifold.

The theoretical number of lamination in Step (2) needs to be not less than 60. The lower limit of the theoretical number of lamination is preferably 200 and more preferably 500. If the theoretical number of lamination is too small, the effect of accelerating the crystallization is insufficient, or alternatively, the distance between the layer interfaces becomes long and the crystal size tends to be too large, so that the effect of the present invention tends not to be obtained. In addition, the degree of crystallinity in the vicinity of both ends of the sheet increases, and the film formation becomes unstable. Furthermore, the transparency after molding may decrease. The upper limit of the theoretical number of lamination in Step (2) is not particularly limited, and is preferably 100000, more preferably 10000, and further preferably 7000. Even when the theoretical number of lamination is extremely increased, the effect may be saturated.

When the lamination in Step (2) is performed by a static mixer, the theoretical number of lamination can be adjusted by selecting the number of elements of the static mixer. A static mixer is generally known as a stationary mixer without a driving part (line mixer), and a fluid entering the mixer is sequentially stirred and mixed by elements. However, when a high viscosity fluid is passed through a static mixer, splitting and lamination of the high viscosity fluid occur, and a laminated fluid is formed. The high viscosity fluid is divided into two parts every time the fluid passes through one element of the static mixer, then joined together and laminated. Therefore, when a high viscosity fluid is passed through a static mixer having the number of elements n, a laminated fluid having a theoretical number of lamination N of $2^n$ is formed.

A typical static mixer element has a structure in which a rectangular plate is twisted by 180 degrees, and there are a right element and a left element depending on the twisting direction. The dimension of each element is 1.5 times the length with respect to the diameter. The static mixer that can be used in the present invention is not limited to those described above.

When the lamination in Step (2) is performed by a multi-layer feed block, the theoretical number of lamination can be adjusted by selecting the number of times of division and lamination of the multi-layer feed block. It is possible to install a plurality of multi-layer feed blocks in series. It is also possible to use, as a laminated fluid, a high viscosity fluid itself supplied to the multi-layer feed block. For example, when the number of lamination of the high viscosity fluid supplied to the multi-layer feed block is p, the number of division and lamination of the multi-layer feed block is q, and the number of the multi-layer feed blocks installed is r, the number of lamination N of the laminated fluid is $N = p \times q^r$.

In Step (3), the laminated fluid is discharged from a die and cast on with a cooling roll to be solidified.

The lower limit of the die temperature is preferably 200°C, and if the temperature is less than the above value, the discharge may become unstable and the thickness may become uneven. The upper limit of the die temperature is preferably 320°C, and if the temperature is more than the above value, the thickness may become uneven, resin deterioration may be caused, and further the appearance may become inferior because of staining of die lips and the like. The die temperature is more preferably not more than 300°C, further preferably not more than 280°C.

The lower limit of the temperature of the cooling roll is preferably 0°C, and if the temperature is less than the above value, the crystallization suppression effect may be saturated. The upper limit of the temperature of the cooling roll is preferably 25°C, and if the temperature is more than the above value, the crystallization degree may become so high that the stretching may be difficult. The temperature of the cooling roll is more preferably not more than 20°C. Further, when the temperature of the cooling roll is controlled to be within the above range, it is preferable to lower the humidity of the environment in the vicinity of the cooling roll for preventing dew formation.

In the casting, the temperature of the cooling roll surface is increased since the resin with high temperature is brought into contact with the surface. Usually, a chill roll is cooled by setting a pipe in the inside of the roll and passing cooling water therethrough, and it is necessary to reduce the temperature difference in the width direction of the chill roll surface by securing a sufficient amount of cooling water, devising the arrangement of the pipe, performing maintenance so that sludge does not adhere to the pipe, and the like. In particular, attention should be paid when cooling the resin at low temperature without using a multi-layered method or the like.

At this time, the thickness of the unstretched sheet is preferably in the range of 15 to 2500 $\mu$m. The thickness of the unstretched sheet is more preferably not more than 500 $\mu$m, further preferably not more than 300 $\mu$m.

The casting in the above-described multi-layer structure is performed in at least 60 layers, preferably not less than 250 layers, and further preferably not less than 1000 layers. If the number of layers is small, the spherulite size of the unstretched sheet becomes large, so that not only the effect of improving stretchability is small, but also the effect of lowering the yield stress of the obtained biaxially stretched film is lost.

Next, a stretching method will be described. A stretching method can be either a simultaneous biaxial stretching method or a sequential biaxial stretching method, and for increasing the piercing strength, it is necessary to increase the plane orientation coefficient in the biaxially stretched polybutylene terephthalate film used for the base layer of the present invention, and therefore a sequential biaxial stretching method is preferred in this respect.

The lower limit of the stretching temperature in the mechanical stretching direction (hereinafter, MD) is preferably 55°C, and more preferably 60°C. If the temperature is less than 55°C, not only film-breaking may easily occur, but also the orientation in the mechanical direction becomes strong due to stretching at low temperature, so that the shrinkage stress during thermo-setting treatment increases, and thus the distortion of molecular orientation in the width direction increases. Consequently, the mechanical strength may be uneven in the width direction. The upper limit of the MD stretching temperature is preferably 100°C, and more preferably 95°C. If the temperature is more than 100°C, mechanical characteristics may be deteriorated because no orientation is applied.

When a PET resin is used as a resin other than the PBT resins, it is preferable that the MD stretching temperature is made higher than the case of the PBT resin alone.

The lower limit of the MD stretching ratio is preferably 2.6 times, more preferably 2.8 times, and further preferably 3.0 times. If the MD stretching ratio is less than the above value, there is a possibility that mechanical characteristics and thickness unevenness may be worsened because no orientation is applied. The upper limit of the MD stretching ratio is preferably 4.3 times, more preferably 4.0 times, and particularly preferably 3.8 times. When the MD stretching ratio is more than the above value, not only the effect of improving the mechanical strength and thickness unevenness is saturated, but also the orientation in the mechanical direction becomes stronger, so that the shrinkage stress during the thermo-setting treatment increases, and thus the distortion of molecular orientation in the width direction increases. Consequently, the mechanical strength may be uneven in the width direction.

The lower limit of the stretching temperature in the transverse direction (hereinafter, TD) is preferably 60°C, more preferably 70°C, further preferably 80°C, and if the temperature is less than the above value, film-breaking may easily occur. The upper limit of the TD stretching temperature is preferably 100°C, and if the temperature is more than the above value, mechanical characteristics may be deteriorated because no orientation is applied. When a PET resin is used as a resin other than the PBT resins, it is preferable that the TD stretching temperature is made higher than the case of the PBT resin alone.

The lower limit of the TD stretching ratio is preferably 3.5 times, more preferably 3.6 times, further preferably 3.7 times, and particularly preferably 4.0 times. If the TD stretching ratio is less than the above value, there is a possibility that mechanical characteristics and thickness unevenness may be worsened because no orientation is applied. The upper limit of the TD stretching ratio is preferably 5 times, more preferably 4.5 times. If the TD stretching ratio is more than the above value, the effect of improving the mechanical strength and thickness unevenness is saturated.

The lower limit of the thermo-setting temperature is preferably 200°C, and more preferably 205°C. If the thermo-setting temperature is less than the above value, thermal shrinkage may become large, and deviation or shrinkage during processing may occur. The upper limit of the thermo-setting temperature is preferably 250°C, more preferably 230°C, and if the temperature is more than the above value, the film melts, or even when the film does not melt, it may become brittle.

The lower limit of the TD relaxation ratio is preferably 0.5%, more preferably 2%, and further preferably 3%. If the ratio is less than the above value, film-breaking may easily occur during thermo-setting. The upper limit of the TD relaxation ratio is preferably 6%, more preferably 5%. If the ratio is more than the above value, not only sagging may occur and result in thickness unevenness, but also shrinkage in the longitudinal direction during thermo-setting may become large, and consequently, the distortion of molecular orientation in the end part may become large and the mechanical strength may be uneven in the width direction.

The time for thermo-setting and the TD relaxation is preferably not less than 0.5 seconds.

As a method for imparting barrier properties to the exterior material for vacuum insulation material of the present invention, as conventionally known, a method in which a metal foil such as an aluminum foil is provided between the biaxially stretched polybutylene terephthalate film, namely the base layer, and the sealant layer, or excellent gas barrier properties can be imparted by forming into a laminated film having a gas barrier layer on at least one side of the biaxially stretched polybutylene terephthalate film.

As the gas barrier layer to be on the biaxially stretched polybutylene terephthalate film used for the base layer of the present invention, a thin film including a metal or an inorganic oxide is preferably used as an inorganic thin film layer, or a coating layer including a barrier resin such as polyvinylidene chloride is preferably used.

Among the gas barrier layers, an inorganic thin film layer is preferably a thin film including a metal or an inorganic oxide. The material for forming the inorganic thin film layer is not particularly limited as long as the material can be made into a thin film, and from the viewpoint of gas barrier properties, inorganic oxides such as silicon oxide (silica), aluminum oxide (alumina), and mixtures of silicon oxide and aluminum oxide are preferred. In particular, a composite oxide of silicon oxide and aluminum oxide is preferable from the viewpoint of satisfying flexibility and denseness of the thin film layer. In this composite oxide, the mixing ratio of the silicon oxide and the aluminum oxide is preferably in the range of 20 to 70% of Al by the mass ratio of the metal components.

If the Al concentration is less than 20%, the water vapor barrier property may be low. On the other hand, if the Al concentration is more than 70%, the inorganic thin film layer tends to be hard, and the film may be broken during secondary processing such as printing or lamination. Accordingly, the barrier property may be deteriorated. The silicon oxide as used herein is various silicon oxides such as SiO and $SiO_2$, or a mixture thereof, and the aluminum oxide as used herein is various aluminum oxides such as AlO and $Al_2O_3$, or a mixture thereof.

The film thickness of the inorganic thin film layer is usually 1 to 800 nm, and preferably 5 to 500 nm. If the film thickness of the inorganic thin film layer is less than 1 nm, it may be difficult to obtain satisfactory gas barrier properties. On the other hand, even when the film thickness is excessively thicker than 800 nm, the effect of improving the gas barrier property along with excessive thickness is not obtained, and it is rather disadvantageous in terms of flexibility and production cost.

The method for forming the inorganic thin film layer is not particularly limited, and for example, known vapor deposition methods such as physical vapor deposition methods (PVD methods) such as vacuum vapor deposition method, sputtering method and ion plating method, or chemical vapor deposition methods (CVD methods) may be appropriately adopted. Hereinbelow, a typical method of forming the inorganic thin film layer will be described by taking a silicon oxide-aluminum oxide based thin film as an example. For example, in the case of adopting the vacuum evaporation method, a mixture of $SiO_2$ and $Al_2O_3$, a mixture of $SiO_2$ and Al, or the like is preferably used as a vapor deposition material.

Usually, particles are used as these vapor deposition materials, and in this case, the size of each particle is desirably a size that does not change the pressure during vapor deposition, and the preferable particle size is from 1 mm to 5 mm.

For heating, systems such as resistive heating, high frequency induction heating, electron beam heating and laser heating can be adopted. It is also possible to adopt reactive vapor deposition by introducing oxygen, nitrogen, hydrogen, argon, carbon dioxide gas, steam or the like as a reaction gas, or using a means such as ozone addition or ion assist.

Further, film forming conditions such as applying a bias to a body to be vapor-deposited (laminated film to be vapor-deposited), and heating or cooling a body to be vapor-deposited can be arbitrarily changed. The vapor deposition materials, reaction gases, application of a bias to a body to be vapor-deposited, heating/cooling, and the like can be changed as well even when a sputtering method or a CVD method is adopted.

(Vacuum insulation body)

The laminate for vacuum insulation material of the present invention is used for applications for keeping cold or warmth. As the vacuum insulation material, for example, one in which a core material such as polyurethane foam is enclosed in a vacuum state in an outer packaging material can be considered.

The laminate for a vacuum insulation material of the present invention is preferably provided with a polyolefin layer which is a heat sealable layer. There are no particular restrictions on the number of layers and the order of lamination in the outer covering material, but it is preferable that the outermost and innermost layers are heat sealable layers (for example, polyolefin layers).

As the layer constitution of the laminate for a vacuum insulation material of the present invention, a biaxially stretched polybutylene terephthalate film according to the present invention is set as a base layer, and the layer constitution is preferably, for example, the base layer / a PO layer, a PET layer / a base layer / a PO layer , the base layer / metal foil layer / PO layer, PET layer / the base layer / metal foil layer / PO layer, and an adhesive layer may be provided between the layers.

Here, the PO layer means a polyolefin layer and the PET layer means polyethylene terephthalate layer.

As mentioned above, since the exterior material for a vacuum insulation material of the present invention uses a base layer containing PBT as a main component, even when it is used under high temperature for a long time, the strength of the exterior material for a vacuum insulation material itself can be suppressed. As a result, the exterior material for a vacuum insulation material has excellent durability.

As the strength of the exterior material for a vacuum insulation material, specifically, the rate of decrease in piercing strength after heating at 120°C $\times$ 1000 hours with respect to the initial piercing strength before the durability test (under 25°C) is preferably 0% to 30%, more preferably 0% to 20%, and particularly preferably 0% to 10%. The piercing strength reduction rate after the durability test of the base layer under the prescribed conditions is within the above range, so that the exterior material for a vacuum insulation material can maintain adequate heat insulating effect when the exterior material for a vacuum insulation material is exposed to high temperature for a long time. Accordingly, the exterior material for a vacuum insulation material can be used for heat insulation materials for household electrical appliances such as refrigerators, hot water supply equipment, and rice cookers; heat insulation materials for houses used for walls, ceilings, roofs, floors, and the like; vehicle roofing materials; heat insulation panels of vending machine and the like.

EXAMPLES

Next, the present invention will be described in more detail by way of examples, but the present invention is not limited to the following examples. A film was evaluated by the following measurement methods.

[Film Thickness]

The thickness of the film was measured by a method according to JIS-Z-1702.

[Intrinsic viscosity of film]

Intrinsic viscosity of the film was measured at 30°C using a mixed solvent of phenol (60% by mass) and 1,1,2,2-tetrachloroethane (40% by mass) as a solvent in accordance with JIS K 7367-5.

[Piercing strength]

Measurement was carried out according to "2. Tensile Strength-Testing Method" defined by "Third: Instruments and Container Wrapping, Standards for Food and Additives" (the Ministry of Health and Welfare, Notice 20 in 1982) in Food Sanitation Act. Each film was pierced by a needle with the tip end diameter of 0.7 mm at piercing speed of 50 mm/min and the strength at the time of piercing the film with the needle was measured to give the piercing strength. The measurement was carried out at normal temperature (23°C) and the unit was [N/μm].

[Durability]

Each of the films obtained in Examples and Comparative Examples was cut into A4 size to prepare evaluation sample. The evaluation sample was set in a dry oven and subjected to a high temperature durability test in an environment of 120°C to evaluate piercing strength over time.

Specifically, the piercing strength reduction rate after 120°C × 1000 hours was calculated by the following equation 1 and was evaluated according to the following criteria.

$$\text{Piercing strength reduction rate (\%)} = 100 \times (\text{piercing strength before durability test - piercing strength after durability test}) / (\text{piercing strength before durability test}) \qquad \text{Formula 1}$$

○; Reduction rate of 30% or less
Δ: Reduction rate of 31% to 49%
×: Reduction rate of 50% or more

[Evaluation of Laminate]

A film obtained in each of the examples and the comparative examples is a base layer. On the base layer, an unstretched polypropylene film ("P1147" manufactured by Toyobo Co., Ltd.) having a thickness of 70 μm as a heat sealable resin layer was laminated using a urethane-based two-component curable adhesive (obtained by blending "TAKELAC (registered trademark) A525S" and "TAKENATE (registered trademark) A50" manufactured by Mitsui Chemicals Inc. at 13.5:1 (mass ratio)) by a dry lamination method and aged at 40°C for 4 days to obtain a laminate for evaluation. Each of adhesive layers formed by the urethane-based two-component curable adhesive had a thickness after drying of about 4 μm.

Similarly to the above-described durability criteria, the laminate obtained the above was also cut into A4 size, and then the cutting sample was set in a dry oven and subjected to a high temperature durability test in an environment of 120°C to evaluate piercing strength over time.

Regarding the durability of the film alone and the laminated laminate, the piercing strength reduction rate after 120°C × 1000 hours was calculated by the following equation 1 and was evaluated according to the following criteria.

$$\text{Piercing strength reduction rate (\%)} = 100 \times (\text{piercing strength before durability test - piercing strength after durability test}) / (\text{piercing strength before durability test}) \qquad \text{Equation 1}$$

○: Reduction rate of 30% or less
Δ: Reduction rate of 31% to 49%
×: Reduction rate of 50% or more

[Raw Material Resin]

(Polybutylene terephthalate(PBT): Examples 1 to 6, Comparative Examples 1 to 3)

In the production of films of Examples 1 to 6, Comparative Examples 1 to 3 described later, 1100-211XG (CHANG CHUN PLASTICS CO., LTD., intrinsic viscosity of 1.28 dl/g) was used as a main raw material polybutylene terephthalate(PBT) resin.

(PET-1; Examples 1 and 2, Comparative Examples 1 and 3)

In the production of films of Examples 1 and 2, and Comparative Examples 1 and 3 described later, a resin containing 0.3% of amorphous silica having an average particle size of 1.5 $\mu$m in a polyethylene terephthalate resin having an intrinsic viscosity of 0.62 dl/g and including terephthalic acid//ethylene glycol = 100//100 (mol%) was used.

(PET-2; Example 3)

In the production of film of Example 3 described later, an isophthalic acid copolymerized polyethylene terephthalate resin having an intrinsic viscosity of 0.72 dl/g and including terephthalic acid/isophthalic acid//ethylene glycol = 80/20//100 (mol%) was used.

(PET-3; Example 4)

In the production of film of Example 4 described later, a neopentyl glycol copolymerized polyethylene terephthalate resin having an intrinsic viscosity of 0.75 dl/g and including terephthalic acid/ethylene glycol/neopentyl glycol = 100//70/30 (mol%) was used.

(PET-4; Example 5 and Comparative Example 2)

In the production of films of Example 5 and Comparative Examples 2 described later, a CHDM copolymerized polyethylene terephthalate resin having an intrinsic viscosity of 0.75 dl/g and including terephthalic acid/ethylene glycol/cyclohexanedimethanol (CHDM) = 100//70/30 (mol%) was used.

(TPE-2; Example 6)

In the production of film of Example 6 described later, as the main raw material polytetramethylene glycol copolymerized PET resin, a PTMG copolymerized polyethylene terephthalate resin and including terephthalic acid/butanediol//polytetramethylene glycol (PTMG) =100//85/15 (mol%) was used.

[Example 1]

Polybutylene terephthalate (PBT), PET-1 as a polyester resin, and silica particles having an average particle size of 2.4 $\mu$m as inactive particles were mixed so that the concentration of silica particle was 1600 ppm using a single screw extruder. The resulting mixture was melted at 295°C, then the melt line was introduced into a static mixer having 12 elements.
Accordingly, the polybutylene terephthalate (PBT) melt body was divided and laminated to obtain a multi-layer melt body formed of the same raw materials. The melt body was casted from a T-die at 270°C and closely stuck to a cooling roll at 25°C by electrostatic adhesion method to obtain an unstretched sheet. Successively, the unstretched sheet was subjected to 3.3 times roll stretching at 70°C in the mechanical direction and then subjected to 4.2 times stretching at 90°C in the transverse direction by leading the sheet to a tenter. The stretched sheet was subject to a thermo-setting treatment under tension at 210°C for 3 seconds and to a relaxation treatment by 5% for 1 second. Thereafter, gripping parts at both ends were cut and removed by 10% each to obtain a mill roll of a biaxially stretched polybutylene terephthalate film having a thickness of 12 $\mu$m. The film forming conditions, physical properties and evaluation results of the obtained film were shown in Table 1.

[Examples 2 to 6]

The same procedures as those in Example 1 were carried out except that the raw material composition and the film forming conditions in Example 1 were changed to the biaxially stretched films shown in Table 1. The film forming conditions, physical properties and evaluation results of the obtained film were shown in Table 1.

[Comparative Examples 1 to 3]

The same procedures as those in Example 1 were carried out except that the raw material composition and the film forming conditions in Example 1 were changed to the biaxially stretched films shown in Table 1. The film forming conditions, physical properties and evaluation results of the obtained film were shown in Table 2.

[Reference Examples 1, 2]

A commercially available polyethylene terephthalate film (E5100 manufactured by Toyobo Co., Ltd.) and a commercially available polyamide film (N1100 manufactured by Toyobo Co., Ltd.) were used. Physical properties and evaluation results thereof were shown in Table 1.

As shown in Table 1, the biaxially stretched polybutylene terephthalate film and the laminate (Examples 1 to 6) obtained by the present invention showed excellent piercing strength, and maintained high piercing strength even after the durability test at 120°C for 1000 hours.

On the other hand, as shown in Table 2, in Comparative Example 1, although the durability was excellent, the piercing strength at the initial stage was low, since the content of the PET resin was large. In addition, in Comparative Example 2, since the content of the CHDM copolymerized polyethylene terephthalate resin added as a polyester resin other than polybutylene terephthalate (PBT) was large, the initial piercing strength was low and durability was also low. Furthermore, in Comparative Example 3, since the draw ratio at the time of stretching the film was low, the degree of plane orientation was low and the piercing strength was insufficient.

[Table 1]

| Item | | | unit | Examples | | | | | |
|---|---|---|---|---|---|---|---|---|---|
| | | | | 1 | 2 | 3 | 4 | 5 | 6 |
| Raw materials | Polybutylene terephthalate resin (A) | | | 1100-211XG | 1100-211XG | 1100-211XG | 1100-211XG | 1100-211XG | 1100-211XG |
| | Content Ratio | | wt% | 65 | 90 | 70 | 90 | 90 | 80 |
| | Polyester resin (B) | | - | PET-1 | PET-1 | PET-2 | PET-3 | PET-4 | TPE-2 |
| | composition | glycol component | | EG (100mol%) | EG (100mol%) | EG(100mol%) | EG(70mol%) NPG(30mol%) | EG(70mo%) CHDM(30mol%) | BD(85mol%) PTMG(15mol%) |
| | | acid component | - | TPA (100mol%) | TPA (100mol%) | TPA(80mol%) IPA(20mol%) | TPA(100mol%) | TPA(100mol%) | TPA(100mol%) |
| | Content ratio | | wt% | 35 | 10 | 30 | 10 | 10 | 20 |
| | Lubricant weight ratio | | ppm | 1600 | 1600 | 1600 | 1600 | 1600 | 1600 |
| Film forming conditions | Die temperature (°C) | | | 270 | 270 | 270 | 270 | 270 | 270 |
| | Presence or absence of super multi-layer | | | presence | presence | presence | presence | presence | presence |
| | Number of elements | | | 12 | 12 | 12 | 12 | 12 | 12 |
| | Chill roll temprature (°C) | | | 25 | 15 | 20 | 20 | 20 | 20 |
| | MD stretching temprature (°C) | | | 70 | 70 | 70 | 70 | 70 | 70 |
| | MD stretching ratio | | | 3.3 | 3.3 | 3.3 | 3.5 | 3.5 | 3.3 |
| | TD stretching temprature (°C) | | | 90 | 90 | 90 | 90 | 90 | 90 |
| | TD stretching ratio | | | 4.2 | 4.2 | 4.5 | 4.5 | 4.5 | 4.5 |
| | Thermo-setting temprature (°C) | | | 210 | 210 | 210 | 210 | 210 | 210 |
| | Thermo-setting time (sec) | | | 3 | 3 | 3 | 3 | 3 | 3 |
| | Relaxation ratio | | | 5 | 5 | 5 | 5 | 5 | 5 |
| | Relaxation time (sec) | | | 1 | 1 | 1 | 1 | 1 | 1 |

(continued)

| Item | | unit | Examples | | | | | |
|---|---|---|---|---|---|---|---|---|
| | | | 1 | 2 | 3 | 4 | 5 | 6 |
| Physical properties of film | Thickness ($\mu$m) | | 20 | 15 | 20 | 25 | 20 | 20 |
| | Intrinsic Viscosity of film | | 0.83 | 0.98 | 0.86 | 0.97 | 0.98 | 0.91 |
| | Piercing Strength (N/$\mu$m) | | 0.56 | 0.90 | 0.570 | 0.880 | 0.860 | 0.870 |
| | Durability | | ○ | ○ | ○ | ○ | ○ | ○ |
| Evaluation of laminate | Durability | | ○ | ○ | ○ | ○ | ○ | ○ |

[Table 2]

| Item | | unit | Comparative Example | | | Reference Example | |
|---|---|---|---|---|---|---|---|
| | | | 1 | 2 | 3 | 1 | 2 |
| Raw materials | Polybutylene terephthalate resin (A) | - | 1100-211XG | 1100-211XG | 1100-211XG | PET E5100 manufactured by TOYOBO CO., LTD. | Ny N1100 manufactured by TOYOBO CO., LTD. |
| | Content Ratio | wt% | 30 | 50 | 65 | | |
| | Polyester resin (B) | - | PET-1 | PET-4 | PET-1 | | |
| | composition — glycol component | - | EG (100mol%) | EG(70mol%) CHDM (30mol%) | EG (100mol%) | | |
| | composition — acid component | | TPA (100mol%) | TPA(100mol%) | TPA (100mol%) | | |
| | Content ratio | wt% | 70 | 50 | 35 | | |
| | Lubricant weight ratio | ppm | 1600 | 1600 | 1600 | | |
| Film forming conditions | Die temperature (°C) | | 270 | 270 | 270 | | |
| | Presence or absence of super multi-layer | | absence | absence | presence | | |
| | Number of elements | | - | - | 12 | | |
| | Chill roll temprature (°C) | | 30 | 20 | 25 | | |
| | MD stretching temprature (°C) | | 80 | 70 | 70 | | |
| | MD stretching ratio | | 3.5 | 3.3 | 2.5 | | |
| | TD stretching temprature (°C) | | 120 | 80 | 90 | | |
| | TD stretching ratio | | 4.3 | 4.3 | 3.0 | | |
| | Thermo-setting temprature (°C) | | 230 | 210 | 210 | | |
| | Thermo-setting time (sec) | | 3 | 3 | 3 | | |
| | Relaxation ratio | | 5 | 5 | 5 | | |
| | Relaxation time (sec) | | 1 | 1 | 1 | | |

| Item | | unit | Comparative Example | | | Reference Example | |
|---|---|---|---|---|---|---|---|
| | | | 1 | 2 | 3 | 1 | 2 |
| Physical properties of film | Thickness (μm) | | 20 | 15 | 20 | 25 | 25 |
| | Intrinsic Viscosity of film | | 0.65 | 0.55 | 0.83 | 0.61 | - |
| | Piercing Strength (N/μm) | | 0.43 | 0.20 | 0.400 | 0.400 | 1.01 |
| | Durability | | ○ | Δ | ○ | ○ | × |
| Evaluation of laminate | Durability | | ○ | × | ○ | ○ | × |

INDUSTRIAL APPLICABILITY

According to the present invention, it is possible to obtain a biaxially stretched polybutylene terephthalate film having a high piercing strength and little deterioration in strength even when used for a long time at a constant temperature and an exterior material for vacuum insulation material using the same, and thus is expected to largely contribute to an industrial field.

**Claims**

1. A laminate for vacuum insulation material comprising at least a base layer and a sealant layer, wherein the base layer has the following features (a) to (c), and the base layer is a biaxially stretched polybutylene terephthalate film having a thickness of 10 to 30 $\mu$m.

   (a) containing 60-90% by weight of polybutylene terephthalate resin (A) and 10-40% by weight of polyester resin (B) other than the polybutylene terephthalate resin (A).
   (b) an intrinsic viscosity of not less than 0.81.
   (c) piercing strength of not less than 0.5N/$\mu$m.

2. The laminate for vacuum insulation material according to claim 1, wherein the polyester resin (B) other than the polybutylene terephthalate resin (A) is at least one resin selected from the group consisting of polyethylene terephthalate (PET); polyethylene naphthalate (PEN); polybutylene naphthalate (PBN); polypropylene terephthalate (PPT); polybutylene terephthalate (PBT) resin copolymerized with at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid; polybutylene terephthalate (PBT) resin copolymerized with at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol; polyethylene terephthalate (PET) resin copolymerized with at least one dicarboxylic acid selected from the group consisting of isophthalic acid, orthophthalic acid, naphthalene dicarboxylic acid, biphenyl dicarboxylic acid, cyclohexane dicarboxylic acid, adipic acid, azelaic acid, and sebacic acid; and polyethylene terephthalate (PET) resin copolymerized with at least one diol component selected from the group consisting of 1,3-butanediol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol.

3. The laminate for vacuum insulation material according to claim 1, wherein an inorganic thin film layer is laminated on the biaxially stretched polybutylene terephthalate film.

## INTERNATIONAL SEARCH REPORT

| | International application No. |
| --- | --- |
| | PCT/JP2017/012261 |

### A. CLASSIFICATION OF SUBJECT MATTER
*B32B27/36*(2006.01)i, *C08J5/18*(2006.01)i, *F16L59/065*(2006.01)i

According to International Patent Classification (IPC) or to both national classification and IPC

### B. FIELDS SEARCHED

Minimum documentation searched (classification system followed by classification symbols)
B32B1/00-43/00, C08J5/00-5/02, C08J5/12-5/22, F16L59/00-59/22

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2015/178390 A1 (Toyobo Co., Ltd.), 26 November 2015 (26.11.2015), paragraphs [0055], [0059] to [0089] & US 2017/0088682 A1 paragraphs [0074], [0078] to [0114]; tables 1 to 4 & JP 2015-178390 A1 & EP 3147313 A1 & CA 2949471 A1 & CN 106459441 A & KR 10-2017-0013281 A & TW 201602184 A | 1-3 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 June 2017 (16.06.17) | 27 June 2017 (27.06.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/012261 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | WO 2015/072163 A1  (Toyobo Co., Ltd.),<br>21 May 2015 (21.05.2015),<br>paragraphs [0102] to [0133]<br>& US 2016/0272771 A1<br>paragraphs [0123] to [0150]; tables 1 to 4<br>& JP 2015-72163 A1      & EP 3069849 A1<br>& CA 2930360 A1          & KR 10-2016-0086814 A<br>& CN 105682893 A         & TW 201518399 A | 1,2 |
| X | WO 2014/077197 A1  (Toyobo Co., Ltd.),<br>22 May 2014 (22.05.2014),<br>paragraphs [0047], [0063] to [0084]<br>& US 2015/0299406 A1<br>paragraphs [0093] to [0133]; tables 1 to 2<br>& JP 2014-77197 A1      & TW 201420316 A<br>& KR 10-2015-0087193 A | 1,2 |
| X | WO 2013/172214 A1  (Toyobo Co., Ltd.),<br>21 November 2013 (21.11.2013),<br>paragraphs [0042], [0054] to [0079]<br>& JP 2013-256110 A      & JP 2016-172454 A<br>& CN 104321372 A         & KR 10-2015-0008872 A<br>& TW 201406831 A | 1,2 |
| A | JP 2015-54863 A  (Mitsubishi Engineering-<br>Plastics Corp.),<br>23 March 2015 (23.03.2015),<br>paragraph [0069]<br>& US 2015/0368459 A1<br>table 1<br>& WO 2014/109352 A1      & EP 2944673 A1<br>& CN 104918997 A | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006077799 A
- JP 2011204674 A
- JP 2012077292 A
- JP SHO51146572 A
- JP 2012146636 A
- WO 2004108408 A